# EUROPÄISCHE PATENTANMELDUNG

(11) **EP 1 731 714 A1**
(43) Veröffentlichungstag der Anmeldung: **13.12.2006**
(21) Anmeldenummer: 05012349.6
(22) Anmeldetag: 08.06.2005
(51) Int. Cl.: F01D 9/02, F01D 11/00, F02C 7/28, F16J 15/34

(54) **Spaltsperrvorrichtung und Verwendung einer solchen**

(71) Anmelder: SIEMENS AKTIENGESELLSCHAFT, 80333 München (DE)
(72) Erfinder: Irmisch, Stefan, 33458 Jupiter, Florida (US)

(57) **Zusammenfassung**

Die Erfindung betrifft eine Spaltsperrvorrichtung (50) für eine eine Strömung (38) begrenzende Kanalwand (36), mit zwei benachbarten Wandabschnitten (31, 32), die unter Bildung eines Spaltes (34) einander stirnseitig gegenüberliegen. Ferner betrifft die Erfindung die Verwendung einer solchen Spaltsperrvorrichtung (50).

Um die den Spalt (34) gegen Heißgaseinzug schützende Leckagemengen an Sperrluft zu reduzieren, wird vorgeschlagen, dass aus dem ersten Wandabschnitt (31) stirnseitig ein sich in den Spalt (34) erstreckendes und quer dazu verschiebbares Absperrelement (44) herausragt, welches eine im ersten Wandabschnitt (31) angeordnete Kolbenfläche (60) und eine der Kolbenfläche (60) gegenüberliegende Dichtstruktur (54) umfasst, die mittels eines auf die Kolbenfläche (60) einwirkenden Druckmediums (D) an einem stirnseitig angeordneten Dichtbereich (56) des zweiten Wandabschnittes (32) anpressbar ist.

## Beschreibung

Die Erfindung betrifft eine Spaltsperrvorrichtung für eine eine Strömung begrenzende Kanalwand, mit zwei benachbarten Wandabschnitten, die unter Bildung eines Spaltes einander stirnseitig gegenüberliegen. Ferner betrifft die Erfindung die Verwendung einer solchen Spaltsperrvorrichtung.

Es ist bekannt, dass in Gasturbinen in einer Brennkammer ein Brennstoff-Luft-Gemisch zu einem Heißgas verbrannt wird, welches anschließend in einer Turbineneinheit zur Erzeugung von mechanischer Energie eingesetzt wird. Dabei wird das Heißgas von einer Brennkammer in einen ringförmigen Heißgaskanal überführt, in dem am Gehäuse angeordnete Turbinenleitschaufeln und am Rotor angeordnete Turbinenlaufschaufeln die Umsetzung der Strömungsenergie des Heißgases in mechanische Energie des Rotors bewirken. Im Übergangsbereich zwischen Brennkammer und ringförmigem Heißgaskanal ist konstruktionsbedingt ein umlaufender Axialspalt vorhanden, dessen Spaltmaß aufgrund der temperaturbedingten Dehnungen, die beim Betrieb der Gasturbine auftreten, variiert und der gegen das Eindringen von Heißgas durch das Ausblasen von Sperrluft geschützt wird. Insbesondere wird im Spalt, der zwischen dem von dem Heißgaskanal zugewandten Ende der Brennkammer und den Plattformen von Leitschaufeln der ersten Turbinenstufe bzw. einem Bauteil zwischen Brennkammer und Leitschaufel gebildet ist, Sperrluft ausgeblasen.

Diese Methode zur Sperrung des Spaltes durch das Ausblasen von Sperrluft wirkt sich negativ auf den Wirkungsgrad der Gasturbine sowie auf die Verbrennungsstabilität innerhalb der Brennkammer aus, da die Sperrluft der zur Verbrennung bereitgestellten Verdichterluft entnommen wird. Insbesondere in Folge von unterschiedlichen Wärmedehnungen der am Spalt beteiligten Bauteile variiert der resultierende Spalt gegenüber dem im Kaltzustand der Gasturbine. Dies erfordert erhebliche Sperrluftmassenströme, da diese für den größtmöglichen auftretenden Spalt ausgelegt werden. Falls ein noch größerer Spalt als berechnet auftritt, kann im schlimmsten Fall eine unzureichende Abdichtung eintreten, die zu einem lokalen Heißgaseinbruch bzw. -eintritt in den Spalt führt, was zu einer abgesenkten Lebensdauer der den Spalt umgebenden Bauteile führt.

Aufgabe der Erfindung ist es daher, eine Spaltsperrvorrichtung für eine eine Strömung begrenzende Kanalwand anzugeben, die, verwendet in einer Gasturbine, zu einem weiter verbesserten Wirkungsgrad und zu einer weiter verbesserten Verbrennungsstabilität sowie zu einer gesteigerten Lebensdauer der Kanalwand führt.

Entsprechend den im Patentanspruch 1 angegebenen Merkmalen wird die auf die gattungsgemäße Spaltvorrichtung gerichtete Aufgabe gelöst, indem aus dem ersten Wandabschnitt stirnseitig ein sich in den Spalt erstreckendes und quer dazu verschiebbares Absperrelement herausragt, welches eine im ersten Wandabschnitt angeordnete Kolbenfläche und eine der Kolbenfläche gegenüberliegende Dichtstruktur umfasst, welche Dichtstruktur mittels eines auf die Kolbenfläche einwirkenden Druckmediums an einem stirnseitig angeordneten Dichtbereich des zweiten Wandabschnittes anpressbar ist.

Die Erfindung geht von der Erkenntnis aus, dass ein sich quer in den Spalt erstreckendes, verschiebbares Absperrelement das Eindringen von Heißgas wirkungsvoll verhindern kann, obwohl aufgrund von Wärmedehnungen sich die stirnseitig gegenüberliegenden Wandabschnitte voneinander weg oder aufeinander zu bewegen und den Spalt in seiner Größe variieren können. Damit das Absperrelement eine bestmögliche Abdichtung des variierenden Spaltes erreichen kann, ist das Absperrelement gegenüber dem ersten Wandabschnitt verschiebbar, damit es mit seiner Dichtstruktur an einem stirnseitig angeordneten Dichtbereich des zweiten Wandabschnitts stets anpressbar ist. Der dazu nötige Anpressdruck wird durch ein Druckmedium erzeugt, welches einem im ersten Wandabschnitt befindlichen Kolbenraum zuführbar ist. Das Absperrelement ragt mit seiner Kolbenfläche in den Kolbenraum hinein, so dass das Druckmedium auf die Kolbenfläche einwirken und damit das Absperrelement am Dichtbereich stets anliegend nachführen kann.

Die Erfindung wendet sich demnach von der Methode ab, bei der das Eindringen von Heißgas in den Spalt lediglich durch das Ausblasen von Sperrluft verhindert wird.

Aufgrund der Verschiebbarkeit des Absperrelements innerhalb des ersten Wandabschnittes und quer zum und in den Spalt kann die erfindungsgemäße Spaltsperrvorrichtung den Spalt trotz veränderbarer Spaltmaße jederzeit wirkungsvoll abdichten.

Dies ist insbesondere von Vorteil, wenn die Spaltsperrvorrichtung in einer insbesondere stationären Gasturbine verwendet wird, bei der einer der Wandabschnitte Teil der Brennkammer der Gasturbine und der andere Wandabschnitt Teil eines ringförmigen Heißgaskanals einer Turbineneinheit ist. Dadurch kann Sperrluft eingespart und anstelle zum Sperren des Spaltes dem Verbrennungsvorgang der Gasturbine zusätzlich zur Verfügung gestellt werden, was beim Betrieb der Gasturbine den Wirkungsgrad weiter erhöht. Darüber hinaus verbessert sich dadurch die Verbrennungsstabilität.

Vorteilhafte Ausgestaltungen sind in den Unteransprüchen angegeben.

Vorzugsweise liegen die Dichtstruktur des Absperrelements und der stirnseitig am zweiten Wandabschnitt vorgesehene Dichtbereich flächig aneinander. Hierdurch wird die Dichtwirkung des Absperrelementes weiter erhöht, was das Eindringen von Heißgas weiter erschwert.

In einer vorteilhaften Ausgestaltung sind die beiden benachbarten Wandabschnitte Teil einer im Querschnitt ringförmigen Kanalwand. Der Spalt ist somit in Umfangsrichtung umlaufend. Dies ermöglicht eine ebenso umlaufende Spaltsperrvorrichtung, bei der zweckmäßiger Weise die Kolbenfläche, die Dichtstruktur und der Kolbenraum jeweils ringförmig ausgebildet sind, so dass an jeder Stelle des Spaltes eine besonders wirkungsvolle Vorkehrung zur Verhinderung des Eindringens von Heißgas in den Spalt gewährleistet werden kann.

Eine besonders zuverlässige und wirksame Spaltsperrvorrichtung wird erreicht, wenn das Absperrelement einen im ersten Wandabschnitt angeordneten Kolbenraum mittels einer zwischen Absperrelement und dem ersten Wandabschnitt vorgesehene Gleitdichtung verschließt, um den für die Verschiebung erforderlichen Druckaufbau zu ermöglichen. Da als Druckmedium vorzugsweise Verdichterluft eingesetzt wird, kann dadurch der nötige Druck besonders einfach bereitgestellt werden, ohne den Wirkungsgrad der Gasturbine bzw. deren Verbrennungsstabilität zu vermindern. Eine besonders wirksame Gleitdichtung umfasst mindestens eine am Absperrelement oder im ersten Wandabschnitt vorgesehene Dichtspitze.

Die Erfindung wird anhand einer Zeichnung näher erläutert.
Es zeigen:
- FIG 1: eine Gasturbine in einem Längsteilschnitt,
- FIG 2: das Detail II aus FIG 1,
der Übergangsbereich einer Ringbrennkammer in einen Heißgaskanal der Turbine nach dem Stand der Technik,
- FIG 3: eine erfindungsgemäße Spaltsperrvorrichtung mit einem kolbenartigen Absperrelement im Querschnitt,
- FIG 4: ein erster Wandabschnitt mit dem kolbenartigen Absperrelement in perspektivischer Ansicht und
- FIG 5: ein Kolbendichtelement als Absperrelement in perspektivischer Ansicht.

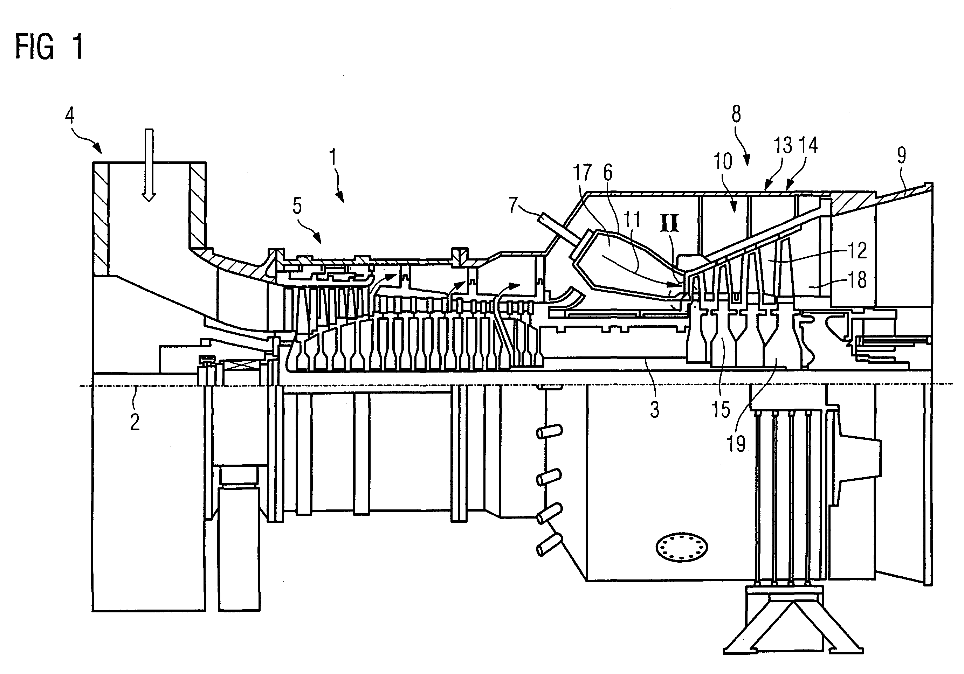

FIG 1 zeigt eine Gasturbine 1 in einem Längsteilschnitt. Sie weist im Inneren einen um eine Rotationsachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 bildet einen Verbrennungsraum 17, der mit einem ringförmigen Heißgaskanal 18 kommuniziert. Dort bilden vier hintereinander geschaltete Turbinenstufen 10 die Turbineneinheit 8. Jede Turbinenstufe 10 ist aus zwei Schaufelringen gebildet. In Strömungsrichtung eines in der Ringbrennkammer 6 erzeugten Heißgases 11 gesehen, folgt im Heißgaskanal 18 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 mittels einer Turbinenscheibe am Rotor 3 angebracht sind. An dem Rotor 3 ist ein Generator oder eine Arbeitsmaschine (nicht dargestellt) angekoppelt.

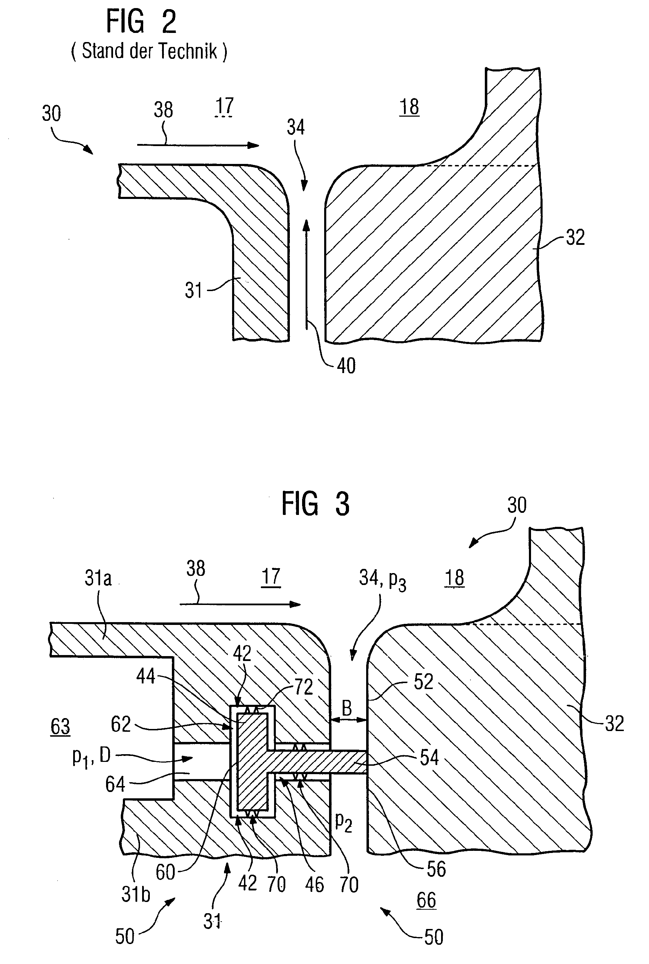

FIG 2 zeigt als Ausschnitt eine eine Strömung begrenzende Kanalwand 30, mit zwei benachbarten Wandabschnitten 31, 32, die unter Bildung eines Spaltes 34 einander stirnseitig gegenüber liegen. Die Wandabschnitte 31, 32 der Kanalwand 30, leiten eine Heißgasströmung 38. Gemäß Ausschnitt II der FIG 1 ist eine solche Anordnung im Übergangsbereich von dem Verbrennungsraum 17 der Ringbrennkammer 6 der Gasturbine 1 zu dem ringförmigen Heißgaskanal 18 der Turbineneinheit 8 vorhanden. Der erste Wandabschnitt 31 kann ein keramisches oder ein metallisches Hitzeschild sein, wohingegen der zweite Wandabschnitt 32 beispielsweise von einer Plattform der Leitschaufel 12 der ersten Turbinenstufe 10 gebildet sein kann.

Um den Spalt 34 gegen Einzug von Heißgas 11 zu sperren, wird beim Stand der Technik lediglich aus diesem mit erhöhtem Druck Sperrluft 40 ausgeblasen (FIG 2).

FIG 3 zeigt eine erfindungsgemäße Spaltsperrvorrichtung 50 für die Kanalwand 30, welche die Heißgasströmung 38 begrenzend führt. Der erste Wandabschnitt 31 ist stirnseitig in zwei Teilelemente 31a und 31b durch parallel zur Heißgasströmung 38 verlaufende und eine mit Nuten 42 versehene Fuge 46 geteilt, um ein parallel zur Heißgasströmung 38 und in den Spalt 34 verschiebbares Absperrelement 44 darin zumindest teilweise aufzunehmen. Die Nut 42 im Wandabschnitt 31 kann durch Fräsen hergestellt werden, wobei das Absperrelement 44 dann in Umfangsrichtung eingeschoben werden muss.

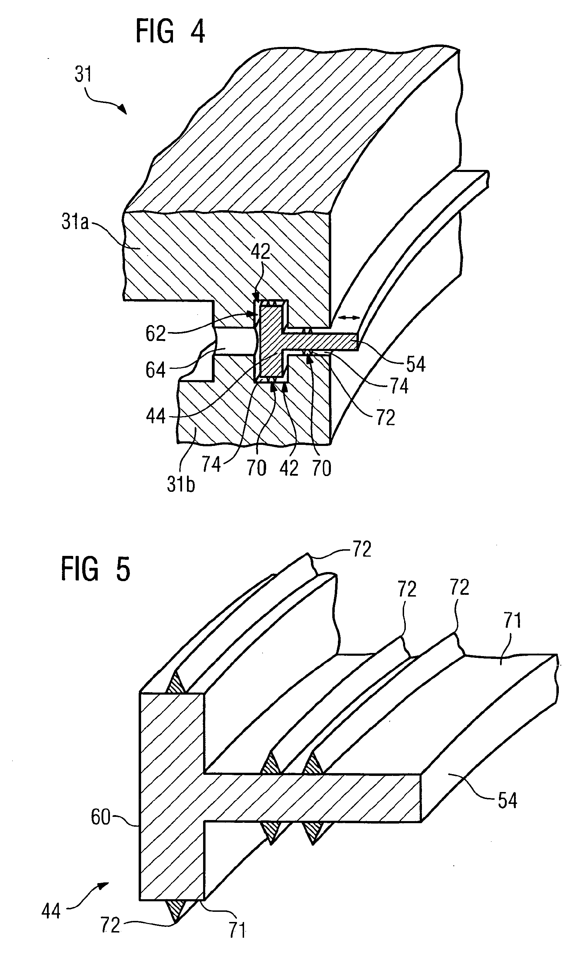

Das im Querschnitt kolbenartige oder hammerartige, im dargestellten Beispiel ringförmig umlaufende Absperrelement 44 (FIG 5) weist eine spaltseitig angeordnete Dichtstruktur 54 auf, die einem in der Stirnseite 52 des zweiten Wandabschnitts 32 angeordneten Dichtbereich 56 gegenüberliegt.

Ferner umfasst das Absperrelement 44 eine Kolbenfläche 60, die dem Querschnitt des Kolbenraums 62 entspricht, welcher im ersten Wandabschnitt 31 zwischen den beiden Teilelementen 31a, 31b vorgesehen ist. Dem Kolbenraum 62 ist von der Rückseite 63 des Wandabschnittes 31 her über einen spaltoder bohrungsförmigen Zuführkanal 64 ein Druckmedium D, vorzugsweise Verdichterendluft, zuführbar, welche üblicherweise ohnehin dem beispielsweise als metallisches Hitzeschild ausgeführten Wandabschnitt 31 zu dessen Kühlung rückseitig - bezogen auf das Heißgas - beaufschlagt. Als Zuführkanal 64 kann beispielsweise auch die Fuge 46 genutzt werden.

Bei der so vorgeschlagenen Verwendung der Spaltsperrvorrichtung 50 in der Gasturbine 1 ist das Absperrelement 44 in Axialrichtung des Rotors 3 verschiebbar. Aufgrund der betriebsbedingten Temperaturschwankungen bewegen und/oder dehnen sich die am Spalt beteiligten Wandabschnitte 31, 32, so dass der stirnseitige Abstand zwischen den beiden Wandabschnitten 31, 32, das Spaltmaß B, variieren kann. Insbesondere bei der Verwendung in der Gasturbine 1 kann während sich ändernder Temperaturbedingungen das Spaltmaß sich ändern. Beispielsweise nach dem Starten der kalten Gasturbine verkleinert sich der Spalt aufgrund von Temperaturdehnungen.

Um eine zuverlässige Abdichtung des Spaltes 34 für jeden Zeitpunkt während des Betriebes zu erzielen, ist das Absperrelement 44 als Dichtelement am Dichtbereich 56 des zweiten Wandabschnittes 32 anpressbar.

Der dazu nötige Anpressdruck wird von dem Druckmedium D erzielt, welches dem Hub- oder Kolbenraum 62 über den Zuführkanal 64 zuführbar ist und in diesem auf die Kolbenfläche 60 des Absperrelementes 44 zu dessen Verschiebung in Richtung des gegenüberliegenden Wandabschnittes 32 einwirkt.

Der Druck p₁ des Druckmediums D ist so gewählt, dass dieser größer ist als der im Spalt auftretende Druck p₂ bzw. P₃. Dadurch ist es möglich, dass das in der Fuge 46 angeordnete Absperrelement 44 nach Art und Weise eines in der Nut 42 bewegbaren Kolbens teilweise aus dem ersten Wandabschnitt 31 heraus in Richtung des zweiten Wandabschnittes 32 unter Druck verschoben wird, damit seine Dichtstruktur 54 am Dichtbereich 56 während des Betriebs stets dicht, dabei vorzugsweise flächig anliegt. Der Druckunterschied zwischen Spalt 34 und Kolbenraum 62 sorgt somit für eine sich selbst an die Spaltgröße bzw. an das Spaltmaß B anpassende Dichtung, sofern der von der Größe des Kolbenraums 62 abhängige Verschiebeweg ausreichend groß gewählt worden ist.

Die Kanalwand 30 trennt die Heißgasströmung 38 gegenüber einem rückwärtigen Raum 66 ab, in dem Kühlluft geführt sein kann. Die Kühlluft weist den Druck p₂ auf, der vorzugsweise geringer ist als der des zum Nachführen des Absperrelements 44 eingesetzten Druckmediums D, jedoch größer ist als der im Spalt 34 heißgasseitige Druck p₃ des Heißgases 11. Falls zwischen Dichtstruktur 54 und Dichtbereich 56 doch eine geringfügige oder auch bedeutsame Undichtigkeit auftritt, kann durch die gewählten Druckverhältnisse ein Leckagestrom aus dem Raum 66 durch den Spalt 34 ausströmen, welcher das nachteilige Eindringen von Heißgas 11 trotzdem wirkungsvoll verhindert.

Um eine besonders verbrauchsarme Nutzung des Druckmediums D zu erreichen, ist das Absperrelement 44 mit einer Gleitdichtung 70 im ersten Wandabschnitt 31 gelagert. Die Gleitdichtung 70 schließt den Kolbenraum 62 gegenüber dem Spalt 34 zumindest teilweise ab und umfasst Dichtspitzen 72, die entweder an Seitenflächen 71 des Absperrelements 44, so wie es in FIG 5 in perspektivischer Ansicht zu sehen ist, oder an diesen gegenüberliegenden, inneren Flächen 74 des Wandabschnitts 31 vorgesehen sein können. Eine ungewollt oder unzulässig große Leckage von Druckmedium D, welches aus dem Kolbenraum 62 ungenutzt in den Spalt 34 einströmt, kann somit vermieden werden.

Wie auch aus der perspektivischen Teilansicht der FIG 4 hervorgeht, können die beiden Wandabschnitte 31, 32 zumindest Teil einer im axialen Querschnitt ringförmig umlaufenden Kanalwand 30 sein, die beispielsweise den Übergang von einer Ringbrennkammer 6 in den Heißgaskanal 18 der Gasturbine 1, begrenzen, vorzugsweise im Bereich des in der FIG 1 mit II gekennzeichneten Ausschnitt II. Im Umfangsrichtung können sowohl die Wandabschnitte 31, 32 der ringförmigen Kanalwand 30 als auch das Absperrelement 44 segmentiert sein. Daneben sind andere Anwendungsgebiete innerhalb der Gasturbine denkbar, beispielsweise an den Übergangsbereichen zwischen Plattformen von Leitschaufeln und den dazu axial benachbart angeordneten Führungsringen, welche Laufschaufeln gegenüberliegenden.

Demzufolge wird mit der Erfindung eine mittels des druckbetätigten Absperrelements sich anpassende Dichtung oder Absperreinrichtung für einen Spalt geschaffen, die sich selbsttätig auf eine variable Spaltgröße einstellt, um die den Spalt gegen Heißgaseinzug schützenden Leckagemengen an Sperrluft zu reduzieren.

## Patentansprüche

1. Spaltsperrvorrichtung (50) für eine eine Strömung (38) begrenzende Kanalwand (30),
mit zwei benachbarten Wandabschnitten (31, 32), die unter Bildung eines Spaltes (34) einander stirnseitig gegenüberliegen,
**dadurch gekennzeichnet,**
**dass** aus dem ersten Wandabschnitt (31) stirnseitig ein sich in den Spalt (34) erstreckendes und quer dazu verschiebbares Absperrelement (44) herausragt, welches eine im ersten Wandabschnitt (31) geführte Kolbenfläche (60) und
eine der Kolbenfläche (60) gegenüberliegende Dichtstruktur (54) umfasst,
die mittels eines auf die Kolbenfläche (60) einwirkenden Druckmediums (D) an einem stirnseitig angeordneten Dichtbereich (56) des zweiten Wandabschnittes (32) anpressbar ist.

2. Spaltsperrvorrichtung (50) nach Anspruch 1 oder 2,
bei der die Dichtstruktur (54) des Absperrelements (44) und der Dichtbereich (56) der Stirnseite (52) des zweiten Wandabschnittes (32) flächig aneinander liegen.

3. Spaltsperrvorrichtung (50) nach Anspruch 1, 2 oder 3,
bei der beide benachbarten Wandabschnitte (31, 32) Teil einer im Querschnitt ringförmigen Kanalwand (30) sind.

4. Spaltsperrvorrichtung (50) nach Anspruch 1,
bei der das Absperrelement (44) einen im ersten Wandabschnitt (31) angeordneten Kolbenraum (62) mittels einer zwischen Absperrelement (44) und erstem Wandabschnitt (31) vorgesehenen Gleitdichtung (70) verschließt, um den für die Verschiebung an Anpressung an den Dichtbereich (56) erforderlichen Druckaufbau bezüglich des Druckmediums (D) verlustarm zu gewährleisten.

5. Spaltsperrvorrichtung (50) nach Anspruch 3 und 4,
bei der die Kolbenfläche (60) die Dichtstruktur (54) und der Kolbenraum (62) jeweils ringförmig ausgebildet sind.

6. Spaltsperrvorrichtung (50) nach einem der Ansprüche 4 oder 5,
bei der die Gleitdichtung (70) mindestens eine am Absperrelement (44) oder im ersten Wandabschnitt (31) vorgesehene Dichtspitze (72) umfasst.

7. Verwendung einer Spaltsperrvorrichtung (50) nach einem der Ansprüche 1 bis 6 in einer insbesondere stationären Gasturbine (1),
bei der einer der Wandabschnitte (31, 32) Teil einer Brennkammer (6) einer Gasturbine (1) und der andere Wandabschnitt (32, 31) Teil eines ringförmigen Heißgaskanals (18) einer Turbineneinheit (8) ist.
